# EUROPEAN PATENT APPLICATION

(11) **EP 2 875 999 A1**
(43) Date of publication of application: **27.05.2015**
(21) Application number: 14190852.5
(22) Date of filing: 29.10.2014
(51) Int. Cl.: B60R 19/56

(54) **Protective device mountable on lorries**

(30) Priority: 25.11.2013 IT VR20130254
(71) Applicant: Natali, Gianfranco, 6924 Sorengo (CH)
(72) Inventor: Natali, Gianfranco, 6924 Sorengo (CH)
(74) Representative: Ponchiroli, Simone

(57) **Abstract**

A protective device mountable on lorries characterised in that it comprises at least one fixing body (8), mountable on the supporting means (2) and associable with the protective profile (3), each fixing body (8) comprising at least one recess (9); constraining means (13), associable with the fixing body (8) and with the supporting means (2), for constraining the fixing body (8) to the supporting means (2). Each protective profile (3) can be fixed to the fixing body (8) and comprises at least one projecting part (25) insertable in the recess (9). The fixing body (8) is at least partly deformable from a home configuration, in which the recess (9) has an initial size and in which the projecting part (25) is insertable in the recess (9) and extractable from the recess (9), to at least one operating configuration, in which the recess (9) has a size smaller than the initial size and in which if the projecting part (25) is inserted in the recess (9) it is substantially clamped in the recess (9). The device (1) comprises deformation means (26) associable with the fixing body (8) for at least partly deforming the fixing body (8) from the home configuration to at least the operating configuration.

## Description

This invention relates to a protective device mountable on lorries and is of the type of protective devices mounted on lorries and used for protecting cyclists, motorcyclists and pedestrians who may find themselves alongside the moving lorry.

Such protective devices, commonly known as "bicycle guards" and "side/underrun guards", are mounted on the sides of the lorry and provide, along the side and/or sides of the vehicle on which they are mounted, a substantially rigid barrier to prevent cyclists, motorcyclists or pedestrians from being able to accidentally go under the loading bed and to prevent them from being run over by the rear wheels.

As already indicated, the protective devices can be mounted on a side of lorries, but also on the sides of trailers and semitrailers. In fact, they may involve the same risks as already indicated.

As is known, protective devices mountable on lorries comprise supporting means and one or more protective profiles.

The supporting means support the protective profile or profiles and are mounted on the chassis of the lorry. In particular, they may be mounted on the side of the chassis below the loading bed.

The supporting means are usually one or more brackets and may be mounted on the chassis of the lorry rotatably relative to said chassis, or they may be fixed relative to it.

Each protective profile is usually an elongate bar and is mounted on the supporting means by, for example, welding or constraining means. In the latter case, the protective profile may comprise a rear cut for fixing the protective profile to the supporting bracket. Said cut substantially provides the space to allow fixing by the constraining means (for example the cut may serve as a nut holder for a bolt).

In use, when the protective profiles are mounted on the supporting means, they are substantially horizontal. Protective profiles usually have a flat face on the outside and they may have a cross-section which is substantially rectangular or "L"-shaped with equal or unequal sides. Protective profiles may comprise at the ends angle irons (that is to say, angular elements) and/or closing caps for closing the protective profiles or the angle irons (if present).

However, these prior art technologies have several disadvantages.

First, mounting of the protective profiles on the supporting brackets may be relatively complex.

Second, fixing of the protective profiles to the supporting brackets may require specialised workers and be relatively time-consuming (in particular in the case of welding).

Furthermore, costs both of labour and for making the protective device may be relatively high.

Moreover, even correct positioning of the protective profiles relative to the supporting means may be relatively complex.

In this context the technical purpose which forms the basis of this invention is to provide a protective device mountable on lorries which is an alternative solution to the prior art technologies and which overcomes the above-mentioned disadvantages.

In particular, the technical purpose of this invention is to provide a protective device mountable on lorries in which mounting of the protective profiles on the supporting brackets is much simpler than in the prior art.

Furthermore, it is the technical purpose of this invention to provide a protective device mountable on lorries in which fixing of the protective profiles to the supporting brackets is faster than in the prior art solutions and does not necessarily require specialised workers.

It is also the technical purpose of this invention to provide a protective device mountable on lorries in which the costs for making the protective device and the labour costs for mounting are lower than those of the prior art.

Finally, it is the technical purpose of this invention to provide a protective device mountable on lorries which allows easy precise positioning of the protective profiles relative to the supporting means and/or relative to the spaces to be protected of the vehicle where it is mounted.

The technical purpose specified and the aims indicated are substantially achieved by a protective device mountable on lorries as described in the appended claims.

Further features and the advantages of this invention are more apparent in the detailed description below, with reference to a preferred, non-limiting embodiment of a protective device mountable on lorries, illustrated in the accompanying drawings, in which:
- Figure 1 is an axonometric view of a part of the chassis of a lorry on which the protective device is mounted;
- Figure 2 is a partly exploded axonometric view of what is illustrated in Figure 1;
- Figure 3 is an axonometric view of a detail of the protective device of Figure 2;
- Figure 4 is a schematic plan view, with some parts transparent, of the detail of Figure 3;
- Figure 5 is a schematic front view, with some parts transparent, of the detail of Figure 3;
- Figure 6 is a schematic side view, with some parts transparent, of the detail of Figure 3;
- Figure 7 is a schematic partial view of the protective device of Figure 1, in cross-section according to the plane VII - VII of Figure 5, in a first operating step;
- Figure 8 shows the protective device of Figure 7 in a second operating step; and
- Figure 9 shows an alternative embodiment of the device of Figure 7.

With reference to the accompanying drawings, the numeral 1 denotes in its entirety a protective device mountable on lorries according to this invention.

It should be noticed that, the term "lorries" refers to all types of lorry, such as curtain-siders or box vans, lorries with a body or with a loading crane mounted on the lorry chassis, lorries with a rear side lift, lorries for transporting other vehicles and lorries of other types.

The term "lorries" also refers to lorries having separate parts including trailers or semitrailers.

The device 1 according to this invention first comprises supporting 2 for supporting one or more protective profiles 3. Said supporting means 2 are in use mountable at a side of a lorry. It should be noticed that advantageously the supporting means 2 are, in use, removably mounted on the chassis of the lorry.

The supporting means 2 may advantageously be one or more elongate supports which may have a tubular shape, therefore, hollow in cross-section, or alternatively they may be solid in cross-section. The supports may have a circular shape in cross-section (as in the embodiment illustrated), or elliptical, square or rectangular.

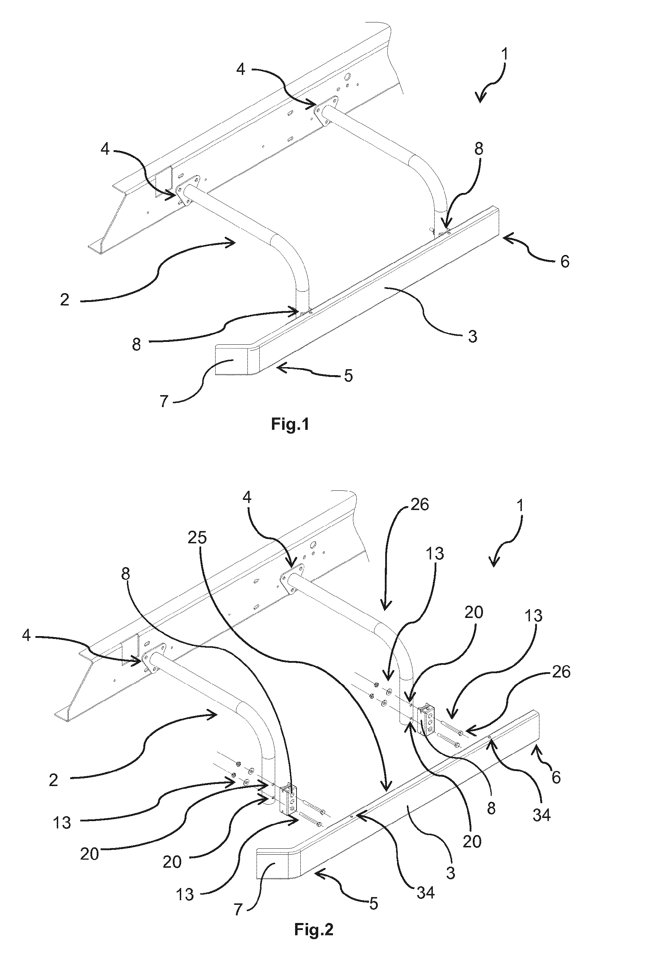

In the embodiment illustrated, the supporting means 2 are advantageously a plurality of "L"-shaped supports whose arms are unequal and substantially perpendicular to one another (see Figures 1 and 2). In particular, in the embodiment illustrated, the longer arm of the "L" is mounted on the side of the lorry and is oriented substantially horizontally, whilst the shorter arm of the "L" is oriented substantially vertically. Moreover, in the embodiment illustrated, the supports comprise a connecting curve between the two arms. However, in other embodiments, the arms of the "L" may be equal and the supports may be more or less elongate and may comprise one or more curves or bends.

It should be noticed that, in other embodiments, it is also possible that the supporting means 2 have any other shape or are of any other type provided that they are suitable for the purpose.

In the embodiment illustrated, the supporting means 2 are, in use, constrained to the side of the lorry (and in particular to the chassis of the lorry) by mounting means 4. In particular, in the embodiment illustrated, said mounting means 4 comprise a plurality of bolts (not illustrated in the accompanying drawings) and at least one pierced plate, fixed to the supports and coupled to the chassis of the lorry by means of the bolts.

It should be noticed that, in other embodiments, the mounting means 4 may be of different types (either of the reversible type or the irreversible type) provided that they are suitable for the purpose.

In the embodiment illustrated, the supporting means 2 are substantially rigid and fixed relative to the chassis of the lorry. However, in other embodiments, it is also possible that the supporting means 2 are, in use, mounted on the lorry rotatably relative to the chassis of the lorry, and/or that they comprise two or more parts which are movable relative to one another.

Moreover, the device 1 comprises at least one protective profile 3 which is elongate and associable with the supporting means 2.

In the embodiment illustrated, each protective profile 3 has a shape which is elongate along a longitudinal axis of extension and is advantageously an elongate bar. In other cases, it may also be constituted of two or more elongate bars which are fixed to one another. In use, each protective profile 3 is positioned substantially horizontally (see Figure 1).

In other embodiments, each protective profile 3 may advantageously have different shapes and may be of different types provided that they are suitable for the purpose.

Each protective profile 3 advantageously comprises a first end part 5 and a second end part 6 (see Figures 1 and 2).

In use, after the device 1 has been mounted on the side of the lorry, the first end part 5 is facing towards the cab of the lorry. In use, the second end part 6 is preferably close to the rear wheel of the lorry.

Moreover, each protective profile 3 comprises, preferably at the first end part in 5 and/or the second end part 6, at least one angle iron 7 (that is to say, an angular element) and/or one closing cap (not illustrated in the accompanying drawings) for closing the angle iron 7 (if present) or the protective profile 3. In the embodiment illustrated, advantageously the protective profile 3 comprises, at the first end part 5, an angle iron 7 which is made from and in one piece with the suitably bent elongate bar (see Figures 1 and 2). However, more information about the protective profile 3 is provided below. According to the innovative aspect of this invention, advantageously the device 1 also comprises at least one fixing body 8, mountable on the supporting means 2 and associable with the protective profile 3 for fixing them to one another (see Figures 1 and 2).

In the preferred embodiment, however, for each protective profile 3, there are at least two fixing bodies 8 present, each mountable on a different support.

In the embodiment illustrated, each fixing body 8 has a main line of extension, extending along an axis of extension which is substantially vertical when the fixing body 8 is mounted on the supporting means 2 and the supporting means 2 are in use mounted on the chassis of the lorry (see Figure 2). However, it should be noticed that, in other embodiments, each fixing body 8 may have different shapes and/or the axis of extension may have a different orientation (for example substantially horizontal).

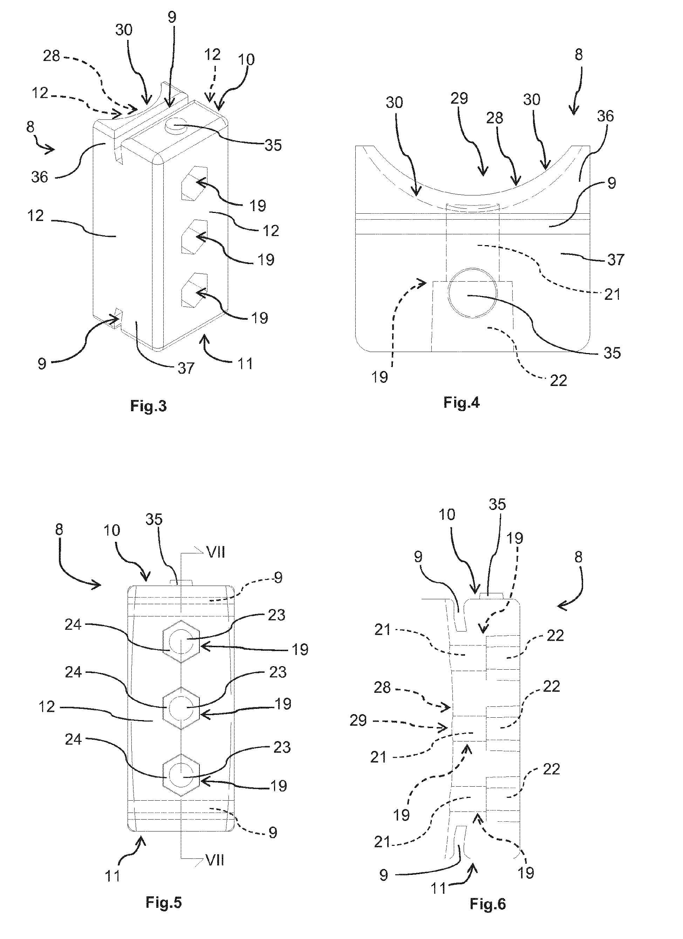

Advantageously, each fixing body 8 comprises at least one recess 9 (see Figures 3 and 6), whose size may vary following a deformation of the fixing body 8, as is explained in more detail below (in particular it can vary its transversal size).

In the embodiment illustrated, each fixing body 8 comprises an upper portion 10 and a lower portion 11 and may also comprise one or more lateral surfaces 12, extending substantially between said upper portion 10 and said lower portion 11. In particular, in the embodiment illustrated, at least one of said lateral surfaces 12 is associable with the protective profile 3 and at least one of said lateral surfaces 12 is associable with the supporting means 2.

It should be noticed that the upper portion 10 and the lower portion 11 (and consequently the lateral surfaces 12) are defined relative to the axis of extension, relative to the orientation with which the fixing body 8 is mounted on the supporting means 2 and also depending on the orientation with which the supporting means 2 are in use mounted on the chassis of the lorry (see Figures 1 and 2).

The recess 9 is advantageously made at either the upper portion 10 or the lower portion 11. However, in other embodiments, the recess 9 could be made at one of the lateral surfaces 12.

In any case, it should be noticed that, in the preferred embodiment illustrated, each fixing body 8 comprises at least two recesses 9 respectively made at the upper portion 10 and the lower portion 11 (see Figures 3 and 6). Moreover, in the embodiment illustrated, each recess 9 is advantageously a straight elongate groove (see Figures 3 and 4) extending between two opposite lateral surfaces 12. It should be noticed that, in the preferred embodiment, said lateral surfaces 12 are different from the lateral surface 12 associable with the protective profile 3 and from the lateral surface 12 associable with the supporting means 2.

It should be noticed that, in other embodiments, it is also possible that each recess 9 has a different shape provided that it is suitable for the purpose (defined below) and/or each recess may extend between two adjacent lateral surfaces 12 (solution not illustrated).

However, more information about the fixing body 8 is provided below.

The device 1 further comprises constraining means 13, associable with each fixing body 8 and with the supporting means 2, for constraining the fixing body 8 to the supporting means 2.

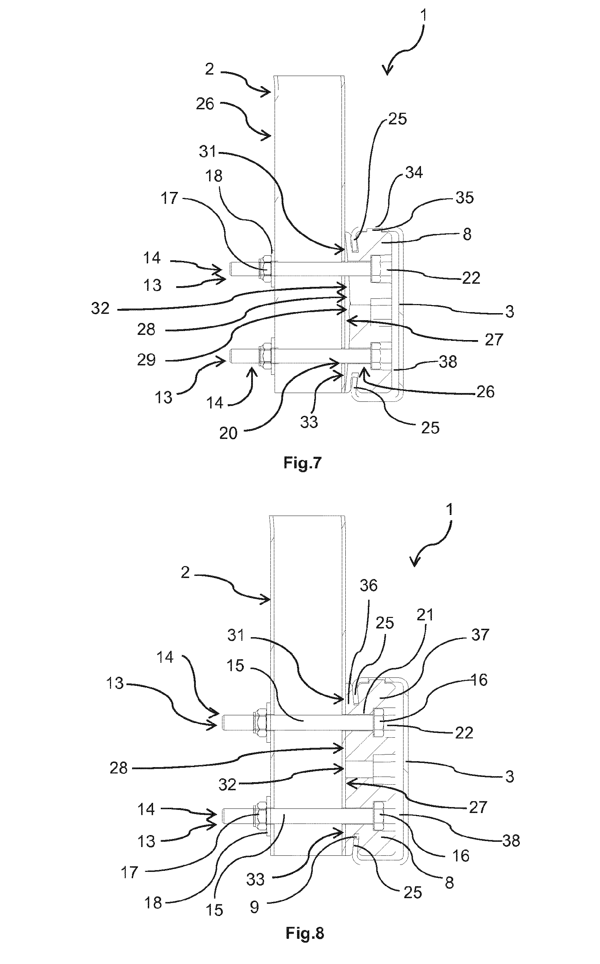

In the embodiment illustrated in Figures 2, 7 and 8, the constraining means 13 comprise one or more bolts 14, each constituted of a screw 15, a nut 17 and if necessary one or more washers 18 (see Figures 2, 7 and 8 and it should be noticed that in Figures 7 and 8 they are shown not in cross-section despite the cross-section plane VII - VII of Figure 5 passing through them).

To allow the constraining means 13 to be associated with the fixing body 8 and with the supporting means 2, advantageously the fixing body 8 comprises one or more first through holes 19 and the supporting means 2 comprise one or more second through holes 20. The second through holes 20 are advantageously alignable with the first through holes 19 and the constraining means 13 are insertable in the first through holes 19 and in the second through holes 20.

In the embodiment illustrated, the first through holes 19 of the fixing body 8 advantageously comprise an inner stretch 21 and an outer stretch 22 (see Figures 4 and 6). When the fixing body 8 is mounted on the supporting means 2, the inner stretch 21 is positioned between the outer stretch 22 and the supporting means 2. It should be noticed that, in the embodiment illustrated, when the protective profile 3 is associated with the fixing body 8, the outer stretch 22 is advantageously positioned between the inner stretch 21 and the protective profile 3 (see Figures 7 and 8).

In the embodiment illustrated, the first through holes 19 and the second through holes 20 extend along an axis of extension which is substantially perpendicular to the longitudinal axis of extension of the protective profile 3 (when the protective profile 3 is associated with the fixing body 8), and which, when the device 1 is mounted on the lorry, is also horizontal. Moreover, in the embodiment illustrated, to insert the screws 15 in the first through holes 19, the screws 15 are inserted first in the outer stretch 22 and then in the inner stretch 21.

Advantageously, in the embodiment illustrated, in cross-section relative to the axis of extension of the through holes, the inner stretch 21 has a first cross-section 23 and the outer stretch 22 has a second cross-section 24 (see Figure 5). In particular, said first cross-section 23 is advantageously smaller than the second cross-section 24 so that, when the screws 15 are inserted in the first through holes 19, the heads 16 of the screws 15 can be locked in the outer stretch 22 and therefore cannot be inserted in the inner stretch 21 (see Figures 7 and 8).

Moreover, advantageously, whilst the first cross-section 23 is circular, the second cross-section 24 is shaped to match the head 16 of the screws 15 (hexagonal, see Figures 3 and 5). In fact, it should be noticed that, in the embodiment illustrated, when the bolts 14 are tightened on the supporting means 2 and on the fixing body 8, the second cross-section 24 of the outer stretch 22 substantially prevents rotation of the screws 15 relative to the fixing body 8 about the axis of extension of the through holes.

However, in other embodiments, the inner stretch 21 and the outer stretch 22 (or more generally the first through holes 19) may have different shapes provided that they are suitable for the purpose.

Moreover, in other embodiments the constraining means 13 may be of different types provided that they are suitable for the purpose.

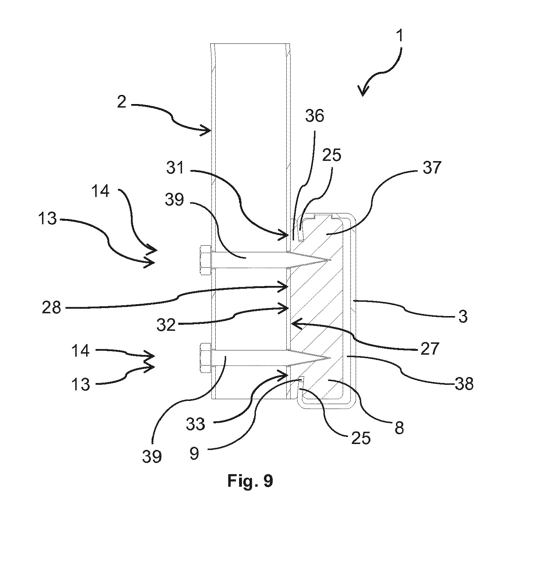

For example, the constraining means may comprise, in place of the bolts 14, one or more screws inserted through the one or more second through holes 20 of the supporting means 2, and screwed directly into the fixing body 8. Depending on requirements, said screws may be self-tapping screws 39 (as in Figure 9 where the constraining means 13 are shown not in cross-section despite the cross-section plane VII - VII of Figure 5 passing through them). In that case, before coupling, the fixing body 8 may be completely free of holes or may only have pilot holes. Alternatively said screws may not be self-tapping, in which case the fixing body may comprise a threaded housing hole.

In this embodiment illustrated, the self-tapping screws 15 are therefore mounted from the side opposite that of the screws 15 described above. Advantageously, each protective profile 3 can be fixed to the fixing body 8 and comprises at least one projecting part 25 insertable in the recess 9. In the embodiment illustrated, each protective profile 3 preferably comprises at least two projecting parts 25, each insertable in one of the recesses 9 (see Figures 7 and 8).

For that purpose, in the embodiment illustrated, at least at its portions couplable to the fixing bodies 8, each protective profile 3 has, in cross-section relative to the longitudinal axis of extension, a "C" shape in which two ends can be identified (see Figures 7 and 8). Advantageously, each protective profile 3 also comprises two elongate main edges which, in cross-section, correspond to said ends. It should be noticed that, in the embodiment illustrated, the projecting parts 25 are constituted of said main edges.

It should also be noticed that, in the most general embodiment, the fixing body 8 is associable with the protective profile 3 thanks to the fact that the fixing body 8 comprises at least one recess 9 and the protective profile 3 comprises at least one projecting part 25 insertable and lockable in said recess 9.

In particular, in the embodiment illustrated, the projecting parts 25 are substantially opposite one another, and the recesses 9 are substantially parallel and vertically aligned with each other when in use the fixing body 8 is associated with the protective profile 3 (see Figures 7 and 8).

It should also be noticed that, in the embodiment illustrated, the projecting parts 25 each, in cross-section relative to the longitudinal axis of extension, converge slightly towards the rest of the protective profile 3 and the recesses 9 are shaped accordingly to receive said projecting parts 25 (see Figures 3, 4 and 6).

However, in other embodiments, the recesses 9 may be aligned differently or may not be aligned. Consequently, the projecting parts 25 may therefore not be opposite one another or may be arranged in any other way (substantially depending on the position of the recesses 9).

According to this invention, the fixing body 8 is at least partly deformable from a home configuration (see Figure 7) to at least one operating configuration (see Figure 8).

In particular, in the embodiment illustrated, when the fixing body 8 is in the home configuration (see Figure 7) it is not deformed, the recess 9 has an initial size and the projecting part 25 is insertable in the recess 9 and extractable from the recess 9. In contrast, when the fixing body 8 is in the operating configuration (see Figure 8) it is deformed, the recess 9 has a size smaller than the initial size and, if the projecting part 25 is inserted in the recess 9 it is substantially clamped in the recess 9.

To guarantee optimum clamping of the projecting part 25 in the recess 9, in the preferred embodiment illustrated, when the projecting part 25 is not inserted in the recess 9, the fixing body 8 must be able to be further deformed as far as a further configuration (not illustrated in the accompanying drawings) in which the size of the recess 9 is advantageously smaller than when it is in the operating configuration.

The device 1 advantageously comprises deformation means 26 associable with the fixing body 8 for at least partly deforming the fixing body 8 from the home configuration to at least the operating configuration.

In the embodiment illustrated, the deformation means 26 are advantageously constituted of the constraining means 13 and the supporting means 2. In fact, when the fixing body 8 is mounted on the supporting means 2 (see Figure 7), the tightening of the constraining means 13 causes deformation of the fixing body 8 against the supporting means 2 at least as far as the operating configuration (see Figure 8).

However, in other embodiments, it is also possible that the deformation means 26 may be of a different type provided that they are suitable for the purpose.

For example, the deformation means 26 may be constituted of a plurality of bolts (independent of the constraining means 13) whose tightening when said deformation means 26 are associated with the fixing body 8, causes the deformation of the fixing body 8 from the home configuration to at least the operating configuration. In particular, the deformation means 26, in this case, may be associated only with the fixing body 8 (solution not illustrated).

It should be noticed that the fixing body 8 may advantageously be deformable with elastic or permanent deformation. In the case of elastic deformation, the fixing body 8 adopts the operating configuration, but can return to the home configuration when the deformation means 26 allow it (for example, in the embodiment illustrated, when the constraining means 13 are no longer tightened). In contrast, in the case of permanent deformation, when the fixing body 8 adopts the operating configuration, it cannot then return to the home configuration even when the deformation means 26 cease acting (therefore, in the embodiment illustrated, not even when the constraining means 13 are no longer tightened).

It should be noticed that, in the preferred embodiment, the fixing body 8 is advantageously deformable with elastic deformation.

It should be noticed that, in the preferred embodiment, whilst the supporting means 2 and the protective profile 3 are advantageously made of metal material, the fixing body 8 is preferably made of plastic material.

Moreover, in the preferred embodiment, the fixing body 8 is advantageously constituted of a single plastic part. However, in other embodiments, it is also possible that the fixing body 8 is constituted of two or more parts, of which at least a first part is made of (deformable) plastic material and one or more second parts are made of material that is substantially rigid (or in any case substantially less deformable than the material used for the first part or parts).

In the embodiment illustrated, the supporting means 2 comprise at least a first coupling surface 27 and the fixing body 8 comprises at least a second coupling surface 28 (which, in the embodiment illustrated, coincides with the lateral surface 12 associable with the supporting means 2). Advantageously, the second coupling surface 28 is opposite the first coupling surface 27 when the fixing body 8 is mounted on the supporting means 2 (see Figures 7 and 8).

Preferably, the second coupling surface 28 comprises at least one concavity 29 relative to (and facing towards) the first coupling surface 27 when the fixing body 8 is in the home configuration and mounted on the supporting means 2 (see Figure 7).

When the fixing body 8 is in the operating configuration and mounted on the supporting means 2, the concavity 29 is, in contrast, reduced or eliminated, after crushing of the second coupling surface 28 against the first coupling surface 27 (see Figure 8), due to the deformation of the fixing body 8. Alternatively, the second coupling surface 28 may comprise, for example, two concavities 29, each made close to one of the two recesses 9 (solution not illustrated).

It should also be noticed that, in other embodiments, it is also possible that the second coupling surface 28 comprises, in addition to or in place of the concavity or concavities 29, one or more projections relative to the first coupling surface 27 at one or more recesses 9 (solution not illustrated). In this case, the projections may be reduced when the fixing body 8 is deformed by the deformation means 26 from the home configuration to the operating configuration.

It should be noticed that, in the embodiment illustrated, the first coupling surface 27 is advantageously constituted substantially of a first axial portion of a cylindrical surface (in fact, it should be noticed that, as previously indicated, in the embodiment illustrated the supports have a circular shape in cross-section).

In the embodiment illustrated, the second coupling surface 28 has, in any cross-section relative to the axis of extension of the fixing body 8 (therefore in planes intersecting the second coupling surface 28), an outline in the shape of an arc 30 which is advantageously concave towards the supports (see Figures 3 and 4) when the fixing body 8 is mounted on the supporting means 2, and which is advantageously substantially shaped to match the outline of the first coupling surface 27 in the same plane. That allows the second coupling surface 28 to be substantially shaped to match the first coupling surface 27 when the fixing body 8 is in the operating configuration. Moreover, in the embodiment illustrated, in the second coupling surface 28 it is advantageously possible to identify an upper zone 31, a central zone 32 and a lower zone 33 (see Figures 7 and 8). It should be noticed that the upper zone 31, the central zone 32 and the lower zone 33 are defined relative to the orientation with which the fixing body 8 is mounted on the supporting means 2 and also depending on the orientation with which the supporting means 2 are in use mounted on the chassis of the lorry (see Figure 2).

It should be noticed that, in the embodiment illustrated, when the fixing body 8 is in the home configuration and mounted on the supporting means 2, the second coupling surface 28, thanks to the concavity 29, is at a distance from the supports (in particular from the first coupling surface 27) which is greater at the central zone 32 than at the upper zone 31 and the lower zone 33 (see Figures 4 and 5). In fact, in the embodiment illustrated, when the fixing body 8 is in the home configuration and mounted on the supporting means 2, the arc-shaped outlines 30 all have substantially the same shape and those positioned at the central zone 32 are further from the supports than those positioned at the upper zone 31 and the lower zone 33.

In the embodiment illustrated, when the fixing body 8 is, in contrast, in the operating configuration and mounted on the supporting means 2, the arc-shaped outlines 30 again all have substantially the same shape, are substantially aligned with one another along the axis of extension of the fixing body 8 and, irrespective of whether or not they are positioned at the upper zone 31, the central zone 32 and the lower zone 33, they are substantially in contact with (and advantageously substantially conform to) the supports (in particular to the first coupling surface 27), after crushing of the second coupling surface 28 against the first coupling surface 27. Moreover, in the embodiment illustrated, when the fixing body 8 is in the operating configuration and mounted on the supporting means 2, advantageously the second coupling surface 28 is substantially constituted of a second axial portion of a cylindrical surface which substantially coincides with the first axial portion of cylindrical surface which, as already indicated, constitutes the first coupling surface 27.

It should also be noticed that, in other embodiments, the first coupling surface 27 may comprise one or more convexities. In the latter case, the concavity or concavities 29 will have to be substantially more accentuated than the convexity or convexities.

However, in other embodiments, it is also possible that the first coupling surface 27 and the second coupling surface 28 each have different shapes provided that they are suitable for the purpose (that is to say, they contribute, with their shape, to the deformation of the fixing body 8 from the home configuration to at least the operating configuration).

In the embodiment illustrated, each protective profile 3 also comprises at least one third hole 34 (see Figures 2 and 7) and the fixing body 8 comprises at least one tooth 35 projecting relative to the rest of the fixing body 8 (see Figures 3 and 5). Said tooth 35 is insertable in the third hole 34 for correctly positioning the protective profile 3 relative to the supporting means 2 (see Figures 1, 7 and 8).

However, in other embodiments, it is also possible that each protective profile 3 comprises at least one tooth 35 projecting relative to the rest of the protective profile 3 and that the fixing body 8 comprises at least one third hole 34 in which the tooth 35 is insertable (solution not illustrated).

It should be noticed that, in the embodiment illustrated, the third hole 34 is advantageously a through hole. However, in other embodiments, the third hole 34 may be a blind hole (if the thickness of the protective profile 3 allows it).

In the embodiment illustrated, the tooth 35 is advantageously positioned on the upper portion 10 (solution illustrated), but in other embodiments the tooth 35 may be positioned on the lower portion 11 (solution not illustrated). Alternatively, the tooth 35 may be positioned on one of the lateral surfaces 12, for example advantageously on the lateral surface 12 associable with the protective profile 3 (solution not illustrated).

Returning to the methods for mounting the protective profile 3 on the fixing body 8, and to the supporting means 2, the fixing body 8 advantageously comprises a base 36, associable with the supporting means 2 and which forms the second coupling surface 28, and a head 37, associable with the protective profile 3 (see Figures 3, 4, 7 and 8).

The recess 9 (or the recesses 9 if present) is preferably made between the base 36 and the head 37 and the protective profile 3 forms a housing 38 in which the head 37 is slidably insertable. In fact, in the embodiment illustrated, when the fixing body 8 is mounted on the supporting means 2, the protective profile 3 is associated with the fixing body 8 by slidably inserting the head 37 of the fixing body 8 in said housing 38.

For that purpose, the housing 38 is advantageously open, at least at the first end part 5 and/or the second end part 6 of the protective profile 3, for receiving the head 37 of the fixing body 8.

In the embodiment illustrated, the housing 38 is also open and accessible even between the projecting parts 25.

It should be noticed that, in the embodiment illustrated (with reference to the orientation of Figure 7), the housing 38 has a first height and the head 37 has a second height (measured at the tooth 35). The first height must be at least equal to the second height.

In contrast, if the tooth 35 is positioned on the lateral surface 12 associable with the protective profile 3 (solution not illustrated), what is indicated above relative to the first height and the second height, with the relevant changes, will apply to the width of the housing 38 and the width of the head 37 of the fixing body 8 (again with reference to the orientation of Figure 7).

In particular, in the embodiment illustrated, after insertion of the head 37 in the housing 38, when the third hole 34 is at the tooth 35, the tooth 35 is inserted in the third hole 34. Therefore, depending on the position where the third hole 34 is made on the protective profile 3, it is possible to determine the position of the protective profile 3 relative to the supporting means 2.

To summarise, in the preferred embodiment, the fixing body 8 is to a first approximation a parallelepiped comprising a lower smaller surface, an upper smaller surface, two opposite main faces and two opposite secondary faces. It should be noticed that the two main faces and the two secondary faces are substantially positioned between the upper smaller surface and the lower smaller surface. It should also be noticed that the upper smaller surface, the lower smaller surface (and consequently the two main faces and the two secondary faces) are defined relative to the orientation with which the fixing body 8 is mounted on the supporting means 2 and also depending on the orientation with which the supporting means 2 are in use mounted on the chassis of the lorry.

Advantageously, in the preferred embodiment (illustrated in the accompanying drawings), one of the two main faces is associable with the supporting means 2 and forms the second coupling surface 28, and the other of the two main faces is associable with the protective profile 3. It should be noticed that, advantageously, the main face associable with the supporting means 2 is substantially concave, whilst the other main face (therefore, the main face associable with the protective profile 3) and the two secondary faces are substantially flat.

It should also be noticed that, in the preferred embodiment, the two recesses 9 are made respectively at the upper smaller surface and the lower smaller surface. Furthermore, each recess 9 is advantageously an elongate groove extending from one of the secondary faces to the other secondary face.

In the preferred embodiment, the tooth 35 is advantageously positioned on the upper smaller surface, preferably between the recess 9 and the main face associable with the protective profile 3.

Finally, it should be noticed that this invention also relates to a lorry comprising a chassis on which the device 1 described above is mounted. This invention brings important advantages.

First, in the protective device mountable on lorries according to this invention, the mounting of the protective profiles on the supporting means is much simpler than that of the prior art and the fixing of the protective profiles to the supporting means is faster than that of the prior art solutions and does not necessarily require specialised workers. In fact, when each fixing body is mounted on the supporting means, each protective profile can be fixed to the fixing bodies by a simple deformation of the fixing body by the deformation means.

Moreover, in the solution provided, the costs for making the protective device and the labour costs are lower than those of the prior art.

Finally, thanks to the tooth and the third hole, it is possible to easily and correctly position the protective profile relative to the supporting means. Finally, it should be noticed that this invention is relatively easy to produce and that even the cost linked to implementing the invention is not very high. The invention described above may be modified and adapted in several ways without thereby departing from the scope of the inventive concept. Moreover, all details of the invention may be substituted with other technically equivalent elements and the materials used, as well as the shapes and dimensions of the various components, may vary according to requirements.

## Claims

1. A protective device mountable on lorries comprising:
- supporting means (2), in use mountable at a side of a lorry, for supporting one or more protective profiles (3); and
- at least one protective profile (3), said protective profile (3) being elongate and associable with said supporting means (2) and in use being positioned substantially horizontally;
**characterised in that** it comprises:
- at least one fixing body (8), mountable on the supporting means (2) and associable with the protective profile (3), each fixing body (8) comprising at least one recess (9);
- constraining means (13), associable with the fixing body (8) and with the supporting means (2), for constraining said fixing body (8) to the supporting means (2);
**in that**:
- each protective profile (3) can be fixed to the fixing body (8) and comprises at least one projecting part (25) insertable in said recess (9);
- the fixing body (8) is at least partly deformable from a home configuration, in which said recess (9) has an initial size and in which the projecting part (25) is insertable in the recess (9) and extractable from the recess (9), to at least one operating configuration, in which said recess (9) has a size smaller than the initial size and in which if the projecting part (25) is inserted in the recess (9) it is substantially clamped in the recess (9);
and **in that** it also comprises
- deformation means (26) associable with the fixing body (8) for at least partly deforming the fixing body (8) from the home configuration to at least the operating configuration.

2. The device according to claim 1, wherein said deformation means (26) are constituted of said constraining means (13) and said supporting means (2), and wherein, when the fixing body (8) is mounted on the supporting means (2), the tightening of the constraining means (13) causes deformation of the fixing body (8) against the supporting means (2) at least as far as the operating configuration.

3. The device according to claim 1 or 2, wherein the fixing body (8) comprises one or more first through holes (19) and the supporting means (2) comprise one or more second through holes (20) alignable with said first through holes (19), the constraining means (13) being insertable in said first through holes (19) and in said second through holes (20).

4. The device according to any one of the preceding claims, wherein the fixing body (8) comprises an upper portion (10) and a lower portion (11), said recess (9) being made at either said upper portion (10) or said lower portion (11).

5. The device according to any one of claims 1 to 4, wherein each fixing body (8) comprises at least two recesses (9) and each protective profile (3) comprises at least two projecting parts (25).

6. The device according to claims 4 and 5, wherein said recesses (9) are made respectively at said upper portion (10) and said lower portion (11).

7. The device according to claim 5 or 6, wherein the protective profile (3) has an elongate shape along a longitudinal axis of extension and, in cross-section relative to said longitudinal axis of extension, a "C" shape with two ends, the protective profile (3) comprising two elongate main edges corresponding, in cross-section, to said ends, said projecting parts (25) being constituted of said main edges.

8. The device according to any one of the preceding claims, wherein said protective profile (3) and the fixing body (8) comprise, one at least one third hole (34), and the other at least one tooth (35) projecting relative to the rest, respectively, of the protective profile or the fixing body (8), said tooth (35) being insertable in said third hole (34) for correctly positioning the protective profile (3) relative to the supporting means (2).

9. The device according to claims 4 and 8, wherein said tooth (35) is positioned on the upper portion (10) and the fixing body (8) comprises a base (36), associable with the supporting means (2), and a head (37), associable with the protective profile (3), the at least one recess (9) being made between said base (36) and said head (37), the protective profile (3) forming a housing (38) in which said head (37) is slidably insertable.

10. The device according to any one of the preceding claims, wherein the supporting means (2) comprise at least a first coupling surface (27) and the fixing body (8) comprises at least a second coupling surface (28); when the fixing body (8) is mounted on the supporting means (2), the second coupling surface (28) being opposite the first coupling surface (27) and comprising at least one concavity (29) relative to the first coupling surface (27) when the fixing body (8) is in the home configuration; and the concavity (29) being reduced or eliminated, after crushing of the second coupling surface (28) against the first coupling surface (27), when the fixing body (8) is in the operating configuration.

11. A lorry comprising a chassis on which the device (1) according to any one of the preceding claims is mounted.
